# EUROPÄISCHE PATENTSCHRIFT

(11) **EP 3 763 033 B1**
(45) Veröffentlichungstag und Bekanntmachung des Hinweises auf die Patenterteilung: **05.10.2022**
(21) Anmeldenummer: 19711027.3
(22) Anmeldetag: 06.03.2019
(51) Int. Cl.: H02P 29/62, H02K 7/14, H02K 1/14, H02K 21/24, F01N 3/20, F04B 17/03, F04B 53/08, F04D 3/00, F04D 13/06, F04D 29/58

(54) **VERFAHREN ZUM BETREIBEN EINES ELEKTRISCHEN MOTORS UND MOTORANORDNUNG**
METHOD FOR OPERATING AN ELECTRIC MOTOR AND MOTOR ARRANGEMENT
PROCÉDÉ PERMETTANT DE FAIRE FONCTIONNER UN MOTEUR ÉLECTRIQUE ET ENSEMBLE MOTEUR

(30) Priorität: 06.03.2018 DE 102018105129
(43) Veröffentlichungstag der Anmeldung: 13.01.2021
(73) Patentinhaber: GKN Sinter Metals Engineering GmbH, 42477 Radevormwald (DE)
(72) Erfinder: ANDREE, Maurice, 47506 Neukirchen-Vluyn (DE); TO, Hong Giang, 40231 Düsseldorf (DE); BORNEMANN, Nils, 53179 Bonn (DE)
(74) Vertreter: karo IP
(86) Internationale Anmeldenummer: PCT/EP2019/055561
(87) Internationale Veröffentlichungsnummer: WO 2019/170738

(56) Entgegenhaltungen:
- EP-A1- 2 306 105
- WO-A1-2016/102257
- DE-A1-102016 103 051

## Beschreibung

Motors und eine Motoranordnung, wobei der elektrische Motor zumindest einen Stator sowie einen Rotor umfasst. Insbesondere ist der elektrische Motor ein Axialflussmotor (AFM). Es sind Anwendungen bekannt, bei denen neben einer Antriebsleistung eines elektrischen Motors auch eine Heizleistung des elektrischen Motors genutzt werden kann. Z. B. kann bei der Förderung einer Hamstoff-Wasser-Lösung (z. B. Adblue), die zur Abgasbehandlung eingesetzt wird, ein Beheizen der Hamstoff-Wasser-Lösung gewünscht sein. Der zum Antrieb einer Pumpe eingesetzte elektrische Motor generiert auch Wärme, die z. B. zum Auftauen der Hamstoff-Wasser-Lösung eingesetzt werden kann.

Die EP 2 306 105 A1 zeigt ein Klimagerät mit einem über einen elektrischen Motor betreibbaren Kompressor.

Die WO 2016/102257 A1 betrifft eine Fördervorrichtung zum Befördern eines Mediums und zum Erwärmen des Mediums.

Die DE 10 2016 103 051 A1 ist auf einen elektrischen Motor gerichtet.

Hiervon ausgehend ist es Aufgabe der vorliegenden Erfindung, die mit Bezug auf den Stand der Technik geschilderten Probleme zumindest zu lindern oder gar zu lösen. Insbesondere soll ein Verfahren zum Betreiben eines elektrischen Motors vorgeschlagen werden, durch das die elektrische Maschine gezielt zur Generierung einer Heizleistung eingesetzt wird.

Zur Lösung dieser Aufgaben wird ein Verfahren gemäß den Merkmalen des Patentanspruchs 1 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zum Betreiben eines elektrischen Motors vorgeschlagen, wobei der elektrische Motor zumindest einen ersten Stator mit zumindest drei Spulen und einen Rotor mit zumindest zwei Magneten aufweist. Der erste Stator und der Rotor sind entlang einer axialen Richtung nebeneinander angeordnet. Die Spulen sind entlang einer Umfangsrichtung (auf einem gemeinsamen Durchmesser) nebeneinander angeordnet. Der elektrische Motor wird zumindest in den folgenden zwei Zuständen betrieben:
a) in einem ersten Zustand werden die Spulen mit jeweils unterschiedlichen Phasen eines drei-Phasen-Stroms betrieben und der Rotor in Drehung um eine Drehachse versetzt (Drehzahl größer als null Umdrehungen pro Minute);
b) in einem zweiten Zustand werden die Spulen mit einem gleichphasigen Wechselstrom betrieben.

Insbesondere erfolgt die Leistungsaufnahme des elektrischen Motors in dem zweiten Zustand (zeitweise bzw. zu vorgebbaren Zeiträumen) ausschließlich zum Aufheizen eines Körpers. Der Körper ist insbesondere beabstandet von dem zumindest einen Stator und dem Rotor angeordnet.

Zudem kann eine Leistungsaufnahme (zeitweise bzw. zu vorgebbaren Zeiträumen) zusätzlich oder auch ausschließlich zum Antreiben des Rotors erfolgen, so dass der Rotor mit einer Drehzahl von mehr als "0" Umdrehungen pro Minute um eine Drehachse rotiert.

In dem zweiten Zustand soll ein Körper insbesondere mittels Induktion erwärmt werden. Der Körper kann z. B. ein Gehäuse (oder einen Teil davon) des elektrischen Motors ausbilden. Der Körper kann eine Leitung für ein Fluid ausbilden, so dass über den Körper ein Fluid erwärmt werden kann.

Bei der Erwärmung durch Induktion entsteht die Wärme unmittelbar im Körper selbst, muss also nicht durch Wärmeleitung übertragen werden. Die Heizleistung ist gut steuerbar. Zur induktiven Erwärmung wird durch den Stator bzw. durch die Spulen des Stators ein magnetisches Wechselfeld erzeugt, das im Material des Körpers Wirbelströme erzeugt. Induktive Erwärmung kann auch durch nichtleitende Materialien (z. B. eine Tankwand) hindurch erfolgen. Die Umgebung wird nur indirekt (insbesondere aufgrund von Wärmestrahlung bzw. -leitung ausgehend vom induktiv erhitzten Körper) erwärmt.

Der elektrische Motor umfasst zumindest einen Stator und einen Rotor. Insbesondere ist der elektrische Motor ein Axialflussmotor, der zumindest einen Stator und einen Rotor umfasst, die koaxial zueinander und entlang einer axialen Richtung nebeneinander angeordnet sind.

Der Stator des elektrischen Motors weist insbesondere ein weichmagnetisches Material auf, zum Beispiel ein sogenanntes "Soft Magnetic Composite" (SMC), oder eine Kombination aus Elektroblechen und SMC. Die Spulen des Stators umfassen Kerne, die bevorzugt aus einem weichmagnetischen Material verpresst und verbackt hergestellt sind. Das SMC-Material wird hierbei nicht gesintert. Vielmehr erfolgt eine Temperierung auf unterhalb einer Schmelztemperatur, die jedoch ausreichend ist, dass die Kerne ihre Geometrie dauerhaft bewahren.

Der Rotor weist insbesondere Permanentmagnete und/oder weichmagnetische Elemente zum Beispiel in Aussparungen auf. Bevorzugt kann mit Permanentmagneten ein permanenterregter Synchron- oder bürstenloser Gleichstrommotor, abgekürzt BLDC, gebildet werden, während beispielsweise mit weichmagnetischen Elementen ein Reluktanzmotor als elektrischer Motor geschaffen werden kann.

Der Aufbau eines Stators, insbesondere unter Nutzung von SMC, sowie weitere Einzelheiten auch betreffend einen Rotor gehen beispielsweise aus der WO 2016/066714 A1 hervor.

Der elektrische Motor weist insbesondere eine elektrische Leistungsaufnahme (also eine maximale Antriebsleistung) von weniger als 1.000 Watt (Nennleistung), bevorzugt von weniger als 500 Watt, besonders bevorzugt von weniger als 100 Watt auf.

Insbesondere erfolgt die Leistungsaufnahme des elektrischen Motors hier einerseits zum Antreiben des Rotors (erster Zustand), so dass der Rotor mit einer Drehzahl von mehr als "0" Umdrehungen pro Minute um eine Drehachse rotiert. Andererseits erfolgt die Leistungsaufnahme des elektrischen Motors zum Aufheizen eines Körpers (zweiter Zustand).

Insbesondere kann der elektrische Motor in beiden Zuständen betrieben werden, so dass ein Antrieb des Rotors durch den Betrieb des elektrischen Motors in dem ersten Zustand und zeitlich parallel ein Erwärmen eines Körpers durch den Betrieb des elektrischen Motors in dem zweiten Zustand erfolgt.

Zeitlich parallel heißt hier insbesondere, dass in einem Zeitintervall (z. B. eine Sekunde) zwischen dem ersten Zustand und dem zweiten Zustand (insbesondere immer wieder hin und her) gewechselt wird, ggf. für unterschiedlich lange Teilintervalle des Zeitintervalls.

Die Leistungsaufnahme zum Antreiben des Rotors und die Leistungsaufnahme zum Aufheizen eines Körpers können insbesondere zeitlich parallel (also innerhalb eines Zeitintervalls, z. B. eine Sekunde, wechselweise) oder auch jeweils ausschließlich erfolgen (also Leistungsaufnahme innerhalb des Zeitintervalls nur zum Aufheizen oder nur zum Antreiben).

Insbesondere wird der elektrische Motor (im Wesentlichen) zum Antrieb des Rotors eingesetzt. Dabei wird bei dem Betreiben des elektrischen Motors mit einer ersten Antriebsleistung (die Antriebsleistung kann als die gesamte aktuelle Leistungsaufnahme des elektrischen Motors angesehen werden, insbesondere eine maximale Antriebsleistung, also z. B. die Nennleistung des elektrischen Motors) der Körper mit einer ersten Heizleistung erwärmt, die höchstens 10 %, insbesondere höchstens 5 % und bevorzugt höchstens 1 % der ersten Antriebsleistung (insbesondere der maximalen Antriebsleistung) beträgt. Insbesondere wird mindestens 90 % (bzw. mindestens 95 % oder mindestens 99 %) der ersten Antriebsleistung zum Antrieb des Rotors eingesetzt.

Die auf den Körper übertragene Heizleistung ist insbesondere die elektrische Leistung in Watt, die durch den elektrischen Widerstand in dem Körper in Wärme umgewandelt wird.

Insbesondere wird als Rotor ein Träger für Magnete bezeichnet. Insbesondere ist der Rotor entlang einer axialen Richtung beabstandet von dem zumindest einen ersten Stator angeordnet, so dass eine Abgrenzung des Rotors von anderen Bauteilen offensichtlich ist.

Der elektrische Motor kann mit einer elektrischen zweiten Antriebsleistung angetrieben werden, wobei eine Erwärmung des Körpers durch eine elektrische zweite Heizleistung erfolgt; wobei die zweite Heizleistung mindestens 20 %, insbesondere mindestens 50 %, bevorzugt mindestens 80 % der zweiten Antriebsleistung beträgt. Insbesondere wird höchstens 80 % (bzw. höchstens 50 % oder höchstens 20 %) der zweiten Antriebsleistung zum Antrieb des Rotors eingesetzt.

Vorliegend wird also vorgeschlagen, einen variablen oder ggf. auch fixen Anteil der durch den elektrischen Motor aufgenommenen elektrischen Leistung (erste oder zweite Antriebsleistung) in Wärme umzuwandeln. Diese Wärme soll bevorzugt in einem Körper mittels Induktion erzeugt werden.

Insbesondere kann bei betragsmäßig gleicher erster und zweiter Antriebsleistung eine betragsmäßig (signifikant) voneinander abweichende erste und zweite Heizleistung eingestellt werden.

Insbesondere weist der elektrische Motor einen zweiten Stator mit zumindest drei Spulen auf. Der Rotor kann entlang der axialen Richtung zwischen dem ersten Stator und dem zweiten Stator angeordnet sein. Die Ausführungen zur Anordnung von erstem Stator und Rotor gelten insbesondere gleichermaßen für den zweiten Stator.

Der Rotor ist insbesondere mit einer Antriebswelle verbunden, die sich koaxial zur Drehachse erstreckt. Insbesondere erstreckt sich die Antriebswelle durch zumindest einen Stator.

Erfindungsgemäß ist in einer radialen Richtung zumindest innerhalb oder außerhalb zumindest eines Stators ein elektrisch leitender Körper angeordnet, der zumindest bei einem Betrieb des elektrischen Motors in dem zweiten Zustand durch Induktion erwärmt wird.

Zusätzlich kann der Körper der Rotor sein. Der Rotor weist dazu neben den Magneten ein Trägermaterial auf, das als Körper bezeichnet wird.

Insbesondere ist ein spezifischer elektrischer erster Widerstand [Ohm ^{∗} Millimeter² / Meter] des Körpers niedriger ist als ein spezifischer elektrischer zweiter Widerstand eines Kerns einer Spule.

Insbesondere weist das für den Kern verwendete SMC-Material einen hohen spezifischen elektrischen Widerstand auf. Insbesondere weist der Körper (z. B. aus einem Stahl hergestellt) einen geringeren (als das für den Kern verwendete Material) spezifischen elektrischen Widerstand.

Insbesondere dient gerade der Körper zur Umsetzung der bereitgestellten Heizleistung in Wärme. Bevorzugt ist der Körper eisenhaltig bzw. ferritisch ausgeführt, so dass eine effektive Erwärmung möglich ist. Insbesondere weist der Körper einen deutlich höheren ferritischen Anteil als ein Kern zumindest einer Spule auf.

Insbesondere ist ein spezifischer elektrischer erster Widerstand um einen Faktor von mindestens zwei, bevorzugt mindestens fünf, besonders bevorzugt mindestens 10, niedriger als ein spezifischer elektrischer zweiter Widerstand.

Durch den Körper können insbesondere für eine Montage der Motoranordnung relevante Aspekte abgedeckt werden. Z. B. ist, da der Stator in den Körper eingesetzt wird, gleichzeitig eine radiale Fixierung/Ausrichtung möglich (ggf. durch einen leichten Presssitz oder eine Spielpassung zur Ausrichtung von Körper und Stator, mit anschließendem Vergießen).

Der Körper kann einen Teil eines Gehäuses der Motoranordnung darstellen und als Montagekörper genutzt werden. Außerdem ist es möglich, eine geeignete Struktur im Körper vorzusehen, sodass eine Lagerung direkt in den Körper eingepresst wird.

Der Körper kann durch die Heizleistung eine Mindesttemperatur von z. B. 50 Grad Celsius, insbesondere von 100 Grad Celsius erreichen, insbesondere wenn die Umgebungstemperatur eine geringere Temperatur als die Mindesttemperatur des Körpers aufweist. Bevorzugt wird die Heizleistung so geregelt, dass eine bestimmte Höchsttemperatur, bevorzugt 100 Grad Celsius, nicht überschritten wird. Insbesondere wird der Körper schnell auf die Höchsttemperatur aufgeheizt und genügend Heizleistung zugeführt, so dass der Körper trotz Wärmeweiterleitung an z. B. ein Fluid und/oder andere Bauteile diese Höchsttemperatur aufrechterhält.

Insbesondere wird die Temperatur des Körpers direkt oder indirekt gemessen und/oder anhand der zugeführten Heizleistung bzw. eines Temperaturmodells berechnet bzw. abgeschätzt.

Insbesondere weist jede Spule des zumindest einen (jeden) Stators einen Kern auf, der sich ausgehend von einem ersten Ende hin zu einem zweiten Ende des zumindest einen Stators (insbesondere parallel zu der axialen Richtung) erstreckt, wobei der Rotor benachbart zu dem zumindest einen zweiten Ende angeordnet ist.

Der Körper erstreckt sich entlang einer Umfangsrichtung vollumfänglich (in einer radialen Richtung innerhalb oder außerhalb der Kerne bzw. der Spulen) und entlang einer axialen Richtung (und der parallel dazu verlaufenden Drehachse) bis hin zu dem zumindest einen ersten Ende des Kerns.

Bevorzugt kontaktiert der Körper an dem zumindest einen ersten Ende die Kerne der Spulen.

Insbesondere wird über den Körper der magnetische Fluss so geleitet, dass ein möglichst hoher Anteil der elektrischen (Antriebs-)Leistung des elektrischen Motors durch den Körper in Wärme umgesetzt werden kann.

Insbesondere erstreckt sich der Körper ausgehend von einer dem ersten Stator abgewandten Stirnseite des Rotors entlang der axialen Richtung und in einer radialen Richtung innerhalb oder außerhalb der Spulen bis hin zu dem ersten Ende.

Insbesondere erstreckt sich der Körper an dem mindestens einen ersten Ende entlang der radialen Richtung bis zumindest über die Erstreckung der Kerne.

Insbesondere erstreckt sich der Körper an dem zweiten Ende entlang der radialen Richtung und entlang der von dem ersten Stator abgewandten Stirnseite des Rotors bis zumindest über die Erstreckung der Kerne (in Flucht über den Rotor).

Sind zwei Statoren vorgesehen, erstreckt sich der Körper insbesondere ausgehend von jedem ersten Ende der Statoren bis hin zu den zweiten Enden bzw. über die zweiten Enden hinweg, so dass der magnetische Fluss des elektrischen Motors entweder über die Kerne beider Statoren oder über die Kerne jeweils einen Stators geleitet wird.

Der Körper ist insbesondere mehrteilig ausgeführt, wobei die einzelnen Teile des Körpers einander kontaktieren oder über einen möglichst geringen (Luft-) Spalt voneinander getrennt angeordnet sind. Der Spalt beträgt insbesondere höchstens ein Millimeter, insbesondere höchstens 0,5 Millimeter, besonders bevorzugt höchstens 200 Mikrometer. Insbesondere liegt ein derartiger Spalt zwischen dem Rotor und dem Körper vor (der Spalt erstreckt sich insbesondere in einer Ebene senkrecht zur Drehachse).

Insbesondere wird in dem zweiten Zustand ein erster Anteil einer den elektrischen Motor beaufschlagenden elektrischen (Antriebs-)Leistung in dem zumindest einen Stator (oder in beiden Statoren zusammen) und ein zweiter Anteil in dem Körper in Wärme umgesetzt, wobei der erste Anteil höchstens 80 %, insbesondere mindestens 40 %, bevorzugt höchstens 20 %, besonders bevorzugt höchstens 5 %, des zweiten Anteils beträgt.

Insbesondere ist über den elektrischen Motor eine Pumpe zur Förderung eines Fluids antreibbar, wobei in dem ersten Zustand die Pumpe (zur Förderung des Fluids) betrieben und in dem zweiten Zustand zumindest das durch die Pumpe förderbare Fluid beheizt wird.

Insbesondere beträgt die in dem zweiten Zustand eingesetzte elektrische (Antriebs-)Leistung mindestens 1 %, insbesondere mindestens 10 %, bevorzugt mindestens 25 %, besonders bevorzugt mindestens 50 %, einer Nennleistung des elektrischen Motors.

In dem zweiten Zustand werden die Spulen mit einem gleichphasigen Wechselstrom betrieben. Es liegt dann insbesondere kein mehrphasiger Strom vor, so dass ein Antrieb des Rotors gerade nicht erfolgt. Über den Wechselstrom wird ein wechselndes Magnetfeld erzeugt, das in dem Körper über Induktion Wärme erzeugen kann.

Der elektrische Motor kann aber auch in anderen Zuständen betrieben werden, in dem die Betriebsarten des ersten Zustands und des zweiten Zustands zeitlich überlagert (also zeitlich zumindest teilweise parallel) oder zeitlich versetzt zueinander durchgeführt werden.

Alternativ oder zusätzlich kann hier folgendes Verfahren zum Einsatz kommen:
Der elektrische Motor weist zumindest einen ersten Stator mit einer Mehrzahl von Spulen und einen Rotor mit zumindest zwei Magneten auf. Der erste Stator und der Rotor sind entlang einer axialen Richtung nebeneinander angeordnet. Die Spulen sind entlang einer Umfangsrichtung (auf einem gemeinsamen Durchmesser) nebeneinander angeordnet. Dabei kann eine Drehgeschwindigkeit des Rotors über ein erstes Frequenzsignal (jeder Phase) des elektrischen Motors variabel einstellbar sein. Insbesondere verändert sich die Drehgeschwindigkeit des Rotors proportional mit dem ersten Frequenzsignal des elektrischen Motors. Insbesondere wird von dem elektrischen Motor über ein erstes Frequenzsignal des elektrischen Motors eine elektrische (Antriebs-)Leistung (in Watt) zum Antrieb des Rotors und über ein zweites Frequenzsignal eine Heizleistung zum Aufheizen des Körpers übertragen, wobei sich das erste Frequenzsignal und das zweite Frequenzsignal (hinsichtlich der Frequenz) mindestens um einen Faktor 2 (insbesondere um einen Faktor 3 oder sogar 5) unterscheiden. Insbesondere ist also die Frequenz des zweiten Frequenzsignals mindestens doppelt (dreifach oder fünffach) so hoch wie die Frequenz des ersten Frequenzsignals.

Insbesondere ist das zweite Frequenzsignal derart hochfrequent, dass über das zweite Frequenzsignal ein Antrieb des Rotors nicht möglich ist, beispielsweise aufgrund von Massenträgheiten oder Materialkennwerten. Insbesondere wird die durch das zweite Frequenzsignal übertragene elektrische Leistung nahezu ausschließlich in Wärme umgewandelt.

Insbesondere werden das erste Frequenzsignal und das zweite Frequenzsignal gleichzeitig zueinander übertragen. Das erste Frequenzsignal und das zweite Frequenzsignal können einander überlagernd (also zum gleichen Zeitpunkt) übertragen werden. Damit ist insbesondere möglich, dass die von dem elektrischen Motor aufgenommene Antriebsleistung (nahezu beliebig) zeitgleich und/oder anteilig bestimmt sowohl in eine elektrische Leistung zum Antrieb des Rotors als auch in eine Heizleistung zum Aufheizen des Körpers umgewandelt werden kann.

Es ist möglich, dass das erste Frequenzsignal und das zweite Frequenzsignal (ausschließlich) zeitlich versetzt zueinander übertragen werden.

Bevorzugt wird der elektrische Motor in dem zweiten Zustand mit einer zweiten Antriebsleistung (also die Leistungsaufnahme des elektrischen Motors) angetrieben, die (im Wesentlichen) ausschließlich zur Aufheizung des Rotors als zweite Heizleistung übertragen wird. Dabei wird insbesondere keine elektrische Leistung zum Antrieb des Rotors verwendet. Insbesondere beträgt also trotz der Leistungsaufnahme des elektrischen Motors (zweite Antriebsleistung) die Drehzahl des Rotors "0" Umdrehungen pro Minute.

Insbesondere wird der elektrische Motor in dem zweiten Zustand nicht beschleunigt. Das heißt insbesondere, dass eine Drehzahl größer null Umdrehungen pro Minute des Rotors vorliegen kann, dass aber der Rotor durch die ausschließlich zur Umwandlung in Wärme eingesetzte Antriebsleistung nicht beschleunigt wird.

Es wird weiter eine Motoranordnung vorgeschlagen, zumindest umfassend einen elektrischen Motor, der zumindest einen ersten Stator mit zumindest drei Spulen und einen Rotor mit zumindest zwei Magneten aufweist. Der erste Stator und der Rotor sind entlang einer axialen Richtung nebeneinander (und koaxial zueinander) angeordnet, wobei die Spulen entlang einer Umfangsrichtung (auf einem gemeinsamen Durchmesser) nebeneinander angeordnet sind. In einer radialen Richtung zumindest innerhalb oder außerhalb des ersten Stators ist ein elektrisch leitender Körper angeordnet. Insbsondere zusätzlich bildet der Rotor den Körper. Ein spezifischer elektrischer erster Widerstand des Körpers ist niedriger ist als ein spezifischer elektrischer zweiter Widerstand eines Kerns einer Spule. Der elektrische Motor ist mit dem bereits beschriebenen Verfahren betreibbar.

Weiter wird eine Pumpenanordnung vorgeschlagen, zumindest umfassend die bereits beschriebene Motoranordnung und zusätzlich umfassend eine Pumpe, die zur Förderung eines Fluids durch den elektrischen Motor antreibbar ist. Der Körper ist so angeordnet, dass das durch Pumpe förderbare Fluid über den Körper beheizbar ist.

Insbesondere weist die Motoranordnung und/oder die Pumpenanordnung eine Steuereinheit auf, die zur Durchführung des vorstehend beschriebenen Verfahrens geeignet und eingerichtet ist, so dass durch die Steuereinheit eine elektrische Leistung zum Antrieb des Rotors und eine Heizleistung zum Aufheizen des Körpers zumindest teilweise unabhängig voneinander regelbar sind.

Die Ausführungen zu dem Verfahren gelten gleichermaßen für die Motoranordnung und die Pumpenanordnung und umgekehrt.

Insbesondere ist der mindestens eine Stator von dem Rotor fluiddicht (ggf. auch gasdicht) getrennt angeordnet.

Es wird also ein Verfahren vorgeschlagen, bei dem ein elektrischer Motor einerseits zum Antrieb eines Rotors (also zur Durchführung einer Drehbewegung) und andererseits zum gezielten Aufheizen eines Körpers mittels Induktion eingesetzt wird. Dabei kann der Körper auch ausschließlich beheizt und der Rotor gar nicht angetrieben werden. Dies ist insbesondere vorteilhaft für Fluide, die einfrieren können, wie z. B. Harnstoff-Wasser-Lösungen, die einen Gefrierpunkt bei ca. -11 Grad Celsius aufweisen. Durch den Körper kann damit einerseits ein in einem Tank bevorratetes Fluid aufgetaut werden und dann in zunehmendem Maße gefördert werden.

Durch den elektrischen Motor kann so eine besonders große Heizleistung zur Verfügung gestellt werden, wobei insbesondere die Heizleistung in der Größenordnung der Nennleistung liegen kann.

Der elektrische Motor ist insbesondere ein so genannter Axialflussmotor, wobei der Rotor und der zumindest eine Stator entlang einer axialen Richtung nebeneinander angeordnet sind. Der Stator weist eine Vielzahl von Kernen (n^{∗}3, mit n = 1, 2, 3, ...) auf, die entlang einer Umfangsrichtung auf einem gemeinsamen Durchmesser nebeneinander angeordnet und jeweils von einer Spule umgeben sind. Der Rotor weist eine Vielzahl von Magneten auf, die entlang der Umfangsrichtung auf einem gemeinsamen Durchmesser (identisch oder unterschiedlich zum Durchmesser der Kerne) nebeneinander auf einem Trägermaterial angeordnet sind. Die Anzahl der Magnete kann sich von der Anzahl der Spulen unterscheiden.

Vorsorglich sei angemerkt, dass die hier verwendeten Zahlwörter ("erste", "zweite", "dritte", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: einen elektrischen Motor in perspektivischer Ansicht;
- Fig. 2:: einen Teil des elektrischen Motors nach Fig. 1 in perspektivischer Ansicht;
- Fig. 3:: den elektrischen Motor nach Fig. 1 in einer Motoranordnung in einer ersten perspektivischen Ansicht;
- Fig. 4:: die Motoranordnung nach Fig. 3 in einer zweiten perspektivischen Ansicht;
- Fig. 5:: die Motoranordnung nach Fig. 3 und 4 in einer perspektivischen Ansicht in einem zweiten Zustand;
- Fig. 6:: die Motoranordnung nach Fig. 3 und 4 in einer perspektivischen Ansicht in einem ersten Zustand;
- Fig. 7:: eine weitere Ausführungsvariante einer Motoranordnung in perspektivischer Ansicht in Explosionsdarstellung;
- Fig. 8:: die Motoranordnung nach Fig. 7 in perspektivischer Ansicht im Schnitt in einem zweiten Zustand;
- Fig. 9:: die Motoranordnung nach Fig. 7 in perspektivischer Ansicht im Schnitt in einem (anderen) zweiten Zustand; und
- Fig. 10:: eine nicht erfindungsgemäße Pumpenanordnung in einer perspektivischen Ansicht.

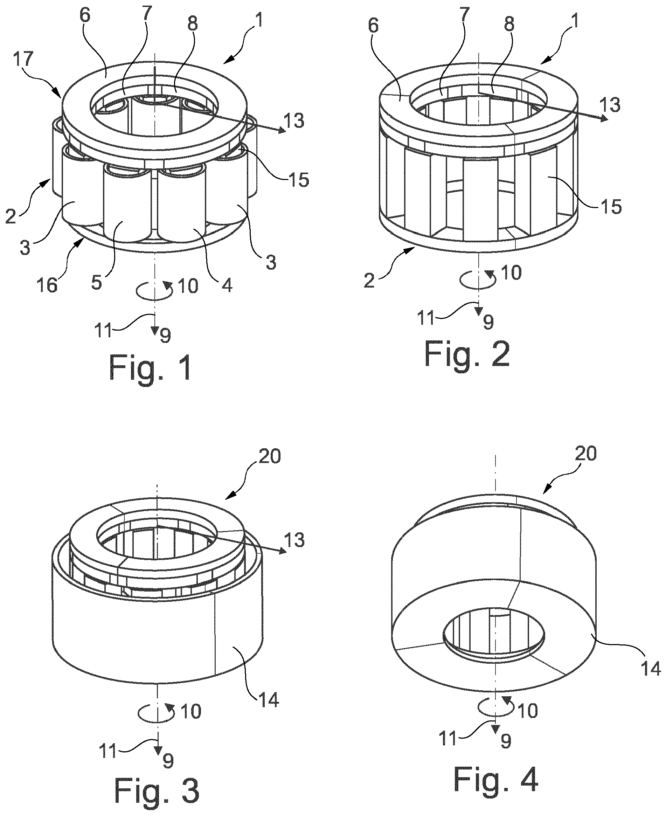

Fig. 1 zeigt einen elektrischen Motor 1 in perspektivischer Ansicht. Der elektrische Motor 1 umfasst zumindest einen ersten Stator 2 und einen Rotor 6. Der elektrische Motor 1 ist ein Axialflussmotor, wobei Stator 2 und Rotor 6 koaxial zueinander und entlang einer axialen Richtung 9 nebeneinander angeordnet sind. Der Rotor 6 weist entlang der Umfangsrichtung 10 abwechselnd erste Magneten 7 (erster Pol) und zweite Magneten 8 (zweiter Pol) auf. Hier sind sechs Magneten 7, 8 (jeweils drei) vorgesehen. Der Stator 2 weist Kerne 15 auf, die sich entlang der axialen Richtung 9 durch Spulen 3, 4, 5 erstrecken. Jede Spule 3, 4, 5 ist an eine Phase eines drei-Phasen-Strom-Generators angeschlossen. Die Spulen 3, 4, 5 sind entlang der Umfangsrichtung 10 in der folgenden Reihenfolge angeordnet: erste Spule 3, zweite Spule 4, dritte Spule 5, erste Spule 3 usw. Hier sind neun Spulen 3, 4, 5 (jeweils drei) vorgesehen.

Jeder Kern 15 erstreckt sich ausgehend von einem ersten Ende 16 des Stators 2 hin zu einem zweiten Ende 17 des Stators 2, wobei der Rotor 6 benachbart zu dem zweiten Ende 17 angeordnet ist.

Fig. 2 zeigt einen Teil des elektrischen Motors 1 nach Fig. 1 in perspektivischer Ansicht. Auf die Ausführungen zu Fig. 1 wird verwiesen.

Hier sind die Spulen 3, 4, 5 nicht dargestellt.

Fig. 3 zeigt den elektrischen Motor 1 nach Fig. 1 in einer Motoranordnung 20 in einer ersten perspektivischen Ansicht. Fig. 4 zeigt die Motoranordnung 20 nach Fig. 3 in einer zweiten perspektivischen Ansicht. Auf die Ausführungen zu Fig. 1 wird verwiesen.

Die Motoranordnung 20 umfasst den elektrischen Motor 1 und einen, in einer radialen Richtung 13 außerhalb des ersten Stators 2 angeordneten elektrisch leitenden Körper 14. Ein spezifischer elektrischer erster Widerstand des Körpers 14 ist höher ist als ein spezifischer elektrischer zweiter Widerstand eines Kerns 15 einer Spule 3, 4, 5. Der elektrische Motor 1 ist mit dem beschriebenen Verfahren betreibbar.

Der Körper 14 erstreckt sich entlang einer Umfangsrichtung 10 vollumfänglich (in einer radialen Richtung 13 außerhalb der Kerne 15 bzw. der Spulen 3, 4, 5) und entlang einer axialen Richtung 9 (und der parallel dazu verlaufenden Drehachse 11) ausgehend von dem zweiten Ende 17 des Stators 2 bis hin zu dem ersten Ende 16 des Stators 2. Der Körper 14 kontaktiert an dem ersten Ende 16 des ersten Stators 2 die Kerne 15 der Spulen 3, 4, 5. Der Körper 14 erstreckt sich an dem ersten Ende 16 entlang der radialen Richtung 13 bis über die Erstreckung der Kerne 15 (Fig. 4). Der Körper 14 bildet hier einen Topf mit einem zylindrischen Abschnitt (ausgehend von dem zweiten Ende 17 bis zu dem ersten Ende 16) und einem Boden (an dem ersten Ende 16).

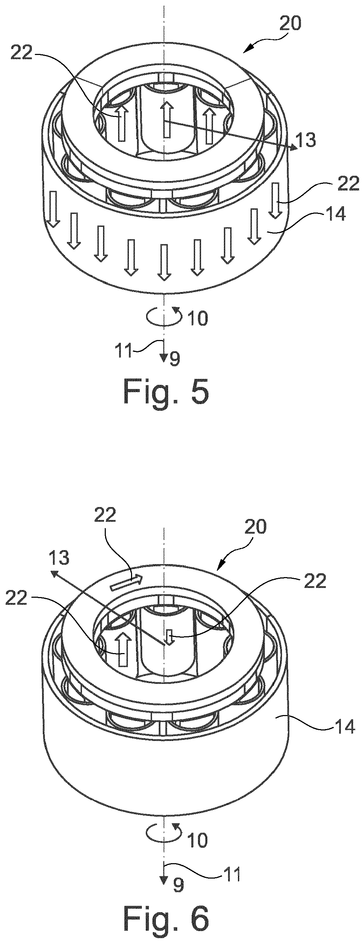

Fig. 5 zeigt die Motoranordnung 20 nach Fig. 3 und 4 in einer perspektivischen Ansicht in einem zweiten Zustand. Auf die Ausführungen zu den Fig. 3 und 4 wird verwiesen.

In dem zweiten Zustand werden die Spulen 3, 4, 5 mit einem gleichphasigen Wechselstrom betrieben. Es liegt dann kein mehrphasiger Strom (also kein Phasenversatz zwischen den einzelnen elektrischen Strömen) vor, so dass ein Antrieb des Rotors 6 gerade nicht erfolgt. Über den Wechselstrom wird ein wechselndes Magnetfeld erzeugt, dass in dem Körper 14 durch den über Induktion erzeugten und übertragenden magnetischen Fluss 22 Wärme erzeugen kann.

Über den Körper 14 wird der magnetische Fluss 22 so geleitet, dass ein möglichst hoher Anteil der elektrischen (Antriebs-)Leistung des elektrischen Motors 1 durch den Körper 14 in Wärme umgesetzt werden kann. Der Körper 14 leitet den magnetischen Fluss 22 ausgehend von dem zweiten Ende 17 entlang der axialen Richtung 9 bis hin zu dem ersten Ende 16 und wieder in die Kerne 15.

Die dargestellten Pfeile zeigen den mit einer gemeinsamen Phase erzeugten und zu einem Zeitpunkt immer gleich starken magnetischen Fluss 22.

Fig. 6 zeigt die Motoranordnung 20 nach Fig. 3 und 4 in einer perspektivischen Ansicht in einem ersten Zustand. Auf die Ausführungen zu den Fig. 3 und 4 wird verwiesen.

In dem ersten Zustand werden die Spulen 3, 4, 5 mit jeweils unterschiedlichen Phasen eines drei-Phasen-Strom-Generators betrieben und der Rotor 6 in Drehung um die Drehachse 11 versetzt (Drehzahl größer als null Umdrehungen pro Minute). Die dargestellten Pfeile zeigen den in Abhängigkeit von der Phase zu einem Zeitpunkt unterschiedlich starken magnetischen Fluss 22. Der magnetische Fluss 22 wird hier insbesondere über den Rotor 6 und zurück zu den Kernen 15 (der jeweils mit gleicher Phase betriebenen Spule 3, 4, 5) geleitet. Ein magnetischer Fluss 22 in dem Körper 15 wird insbesondere in einer zu vernachlässigenden Größe erzeugt.

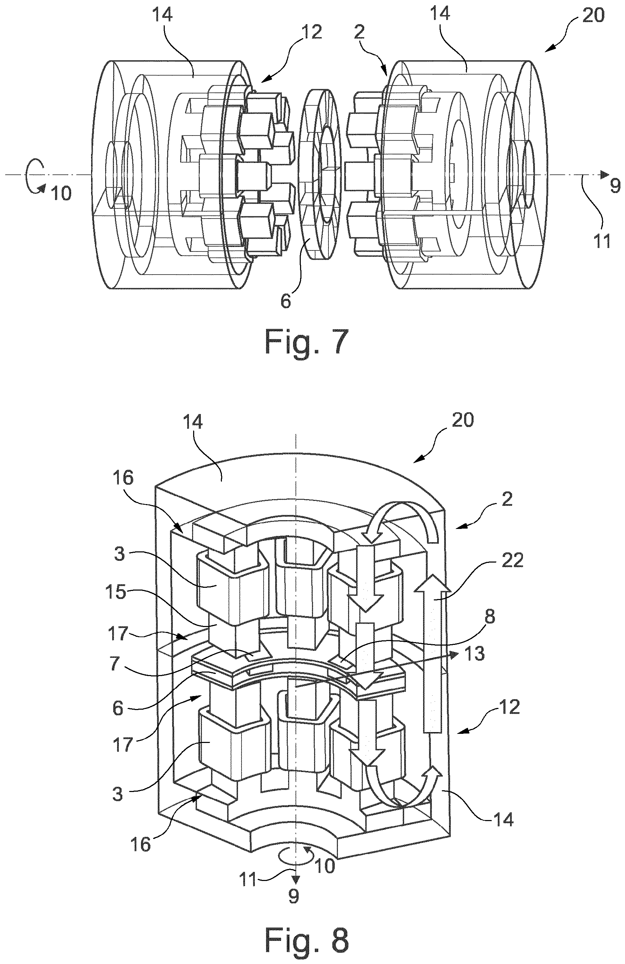

Fig. 7 zeigt eine weitere Ausführungsvariante einer Motoranordnung 20 in perspektivischer Ansicht in Explosionsdarstellung.

Hier weist der elektrische Motor 1 einen ersten Stator 2 und einen zweiten Stator 12 mit je Stator 2, 12 neun Spulen 3, 4, 5 auf (also je Stator 2, 12 drei erste Spulen 3, drei zweite Spulen 4 und drei dritte Spulen 5). Der Rotor 6 ist entlang der axialen Richtung 9 zwischen dem ersten Stator 2 und dem zweiten Stator 12 angeordnet.

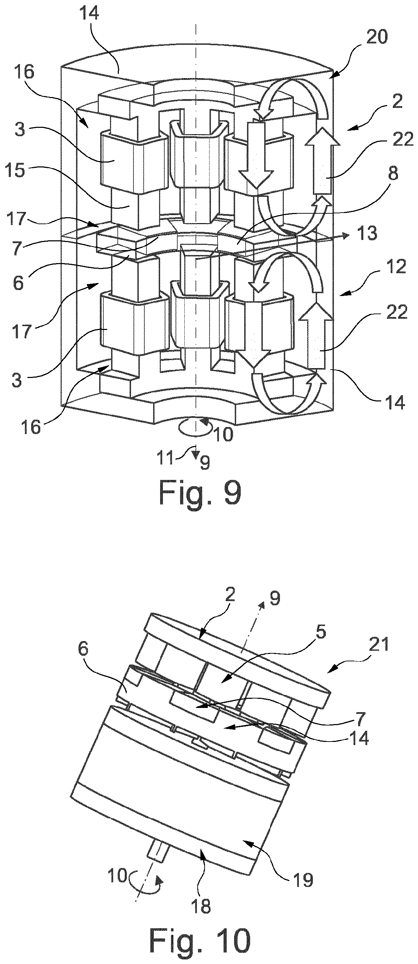

Die Motoranordnung 20 weist zwei Körper 14 auf. Jeder Körper 14 erstreckt sich ausgehend von dem zweiten Ende 17 eines Stators 2, 12 entlang der axialen Richtung 9 und in einer radialen Richtung 13 außerhalb der Spulen 3, 4, 5 bis hin zu dem ersten Ende 16 des jeweiligen Stators 2, 12. Jeder Körper 14 erstreckt sich an dem ersten Ende 16 entlang der radialen Richtung 13 bis über die Erstreckung der Kerne 15. Jeder Körper 14 bildet einen Topf mit einem zylindrischen Abschnitt (ausgehend von dem zweiten Ende 17 bis zu dem ersten Ende 16) und einem Boden (an dem ersten Ende 16). Über die Stirnseiten der Körper 14 an den zweiten Enden 17 kontaktieren die Körper 14 einander (siehe Fig. 8 und 9).

Fig. 8 zeigt die Motoranordnung 1 nach Fig. 7 in perspektivischer Ansicht im Schnitt in einem zweiten Zustand. Auf die Ausführungen zu Fig. 7 wird verwiesen.

In dem zweiten Zustand werden die Spulen 3, 4, 5 mit einem gleichphasigen Wechselstrom betrieben. Es liegt dann kein mehrphasiger Strom (also kein Phasenversatz zwischen den einzelnen elektrischen Strömen) vor, so dass ein Antrieb des Rotors 6 gerade nicht erfolgt. Über den Wechselstrom wird ein wechselndes Magnetfeld erzeugt, dass in dem (mehrteiligen) Körper 14 durch den über Induktion erzeugten und übertragenden magnetischen Fluss 22 Wärme erzeugen kann.

Über den Körper 14 wird der magnetische Fluss 22 so geleitet, dass ein möglichst hoher Anteil der elektrischen (Antriebs-)Leistung des elektrischen Motors 1 durch den Körper 14 in Wärme umgesetzt werden kann. Der Körper 14 leitet den magnetischen Fluss 22 ausgehend z. B. von einem ersten Ende 16 des zweiten Stators 12 zunächst entlang der radialen Richtung 13 und dann entlang der axialen Richtung 9 bis hin zu dem ersten Ende 16 des ersten Stators 2 und dort über die Kerne 15 des ersten Stators 2 entlang der axialen Richtung 9 über den Rotor 6 zu den Kernen 15 des zweiten Stators 12 und wieder bis zum ersten Ende 16 des zweiten Stators 12.

Fig. 9 zeigt die Motoranordnung nach Fig. 7 in perspektivischer Ansicht im Schnitt in einem (anderen) zweiten Zustand. Auf die Ausführungen zu Fig. 8 wird verwiesen.

Im Unterschied zu Fig. 8 wird hier der magnetische Fluss 22 über jeweils nur einen Stator 2, 12 geleitet. Der (mehrteilige) Körper 14 leitet den magnetischen Fluss 22 ausgehend z. B. von einem ersten Ende 16 des zweiten Stators 12 zunächst entlang der radialen Richtung 13 und dann entlang der axialen Richtung 9 bis hin zu dem zweiten Ende 17 des zweiten Stators 12 und dort über die Kerne 15 des zweiten Stators 12 entlang der axialen Richtung 9 wieder bis zum ersten Ende 16 des zweiten Stators 12. Gleiches gilt für den ersten Stator 2. Der magnetische Fluss 22 wird also ausgehend z. B. von dem ersten Ende 16 des ersten Stators 2 entlang der axialen Richtung 9 über die Kerne 15 des ersten Stators 2 bis hin zu dem zweiten Ende 17 des ersten Stators 2 geleitet und anschließend über den Körper 14 entlang der axialen Richtung 9 wieder bis zum ersten Ende 16 des ersten Stators 2.

Fig. 10 zeigt eine Pumpenanordnung 21 in einer perspektivischen Ansicht. Die Pumpenanordnung 21 umfasst einen elektrischen Motor 1 mit einem ersten Stator 2 (mit Spulen 3, 4, 5) und einem Rotor 6 (mit Magneten 7, 8) sowie zusätzlich eine Pumpe 18, die zur Förderung eines Fluids 19 durch den elektrischen Motor 1 antreibbar ist. Der Körper 14 wird hier durch das die Magneten 7, 8 tragende Trägermaterial des Rotors 6 gebildet. Diese Anordnung ist besonders vorteilhaft, wenn der Körper 14 über eine hochfrequente Anregung erwärmt wird.

Bevorzugt ist allerdings, dass der Körper 14 wie in Fig. 3 bis 9 dargestellt angeordnet ist, wobei das Fluid 19 über eine möglichst effektiv wärmeleitende Verbindung mit dem Körper verbunden ist.

### Bezugszeichenliste

- 1: Motor
- 2: erster Stator
- 3: erste Spule
- 4: zweite Spule
- 5: dritte Spule
- 6: Rotor
- 7: erster Magnet
- 8: zweiter Magnet
- 9: axiale Richtung
- 10: Umfangsrichtung
- 11: Drehachse
- 12: zweiter Stator
- 13: radiale Richtung
- 14: Körper
- 15: Kern
- 16: erstes Ende
- 17: zweites Ende
- 18: Pumpe
- 19: Fluid
- 20: Motoranordnung
- 21: Pumpenanordnung
- 22: magnetischer Fluss

## Patentansprüche

1. Verfahren zum Betreiben eines elektrischen Motors (1), wobei der elektrische Motor (1) zumindest einen ersten Stator (2) mit zumindest drei Spulen (3, 4, 5) und einen Rotor (6) mit zumindest zwei Magneten (7, 8) aufweist; wobei der erste Stator (2) und der Rotor (6) entlang einer axialen Richtung (9) nebeneinander angeordnet sind, wobei die Spulen (3, 4, 5) entlang einer Umfangsrichtung (10) nebeneinander angeordnet sind, wobei der elektrische Motor (1) zumindest in den folgenden zwei Zuständen betrieben wird:
a) in einem ersten Zustand werden die Spulen (3, 4, 5) mit jeweils unterschiedlichen Phasen eines drei-Phasen-Stroms betrieben und der Rotor (6) in Drehung um eine Drehachse (11) versetzt;
b) in einem zweiten Zustand werden die Spulen (3, 4, 5) mit einem gleichphasigen Wechselstrom betrieben;
wobei in einer radialen Richtung (13) zumindest innerhalb oder außerhalb des ersten Stators (2) ein elektrisch leitender Körper (14) angeordnet ist, der zumindest bei einem Betrieb des elektrischen Motors (1) in dem zweiten Zustand durch Induktion erwärmt wird; wobei jede Spule (3, 4, 5) einen Kern (15) aufweist, der sich ausgehend von einem ersten Ende (16) hin zu einem zweiten Ende (17) des ersten Stators (2) erstreckt, wobei der Rotor (6) benachbart zu dem zumindest einen zweiten Ende (17) angeordnet ist;
**dadurch gekennzeichnet, dass**
sich der Körper (14) entlang einer Umfangsrichtung (10) vollumfänglich und entlang einer axialen Richtung (9) bis hin zu dem zumindest einen ersten Ende (16) erstreckt.

2. Verfahren nach Patentanspruch 1, wobei der elektrische Motor (1) in beiden Zuständen betrieben wird, so dass ein Antrieb des Rotors (6) durch den Betrieb des elektrischen Motors (1) in dem ersten Zustand und zeitlich parallel ein Erwärmen eines Körpers (14) durch den Betrieb des elektrischen Motors (1) in dem zweiten Zustand erfolgt.

3. Verfahren nach einem der vorhergehenden Patentansprüche, wobei der elektrische Motor (1) einen zweiten Stator (12) mit zumindest drei Spulen (3, 4, 5) aufweist; wobei der Rotor (6) entlang der axialen Richtung (9) zwischen dem ersten Stator (2) und dem zweiten Stator (12) angeordnet ist.

4. Verfahren nach einem der vorhergehenden Patentansprüche, wobei ein spezifischer elektrischer erster Widerstand des Körpers (14) niedriger ist als ein spezifischer elektrischer zweiter Widerstand eines Kerns (15) einer Spule (3, 4, 5).

5. Verfahren nach einem der vorhergehenden Patentansprüche, wobei der Körper (14) an dem zumindest einen ersten Ende (16) die Kerne (15) der Spulen (3, 4, 5) kontaktiert.

6. Verfahren nach einem der vorhergehenden Patentansprüche, wobei in dem zweiten Zustand ein erster Anteil einer den elektrischen Motor (1) beaufschlagenden elektrischen Leistung in dem zumindest einen Stator (2, 12) und ein zweiter Anteil in dem Körper (14) in Wärme umgesetzt werden, wobei der erste Anteil höchstens 80 % des zweiten Anteils beträgt.

7. Verfahren nach einem der vorhergehenden Patentansprüche, wobei über den elektrischen Motor (1) eine Pumpe (18) zur Förderung eines Fluids (19) antreibbar ist, wobei in dem ersten Zustand die Pumpe (18) betrieben und in dem zweiten Zustand zumindest das durch die Pumpe (18) förderbare Fluid (19) beheizt wird.

8. Verfahren nach einem der vorhergehenden Patentansprüche, wobei die in dem zweiten Zustand eingesetzte elektrische Leistung zumindest 1 % einer Nennleistung des elektrischen Motors (1) beträgt.

9. Motoranordnung (20), zumindest umfassend einen elektrischen Motor (1), der zumindest einen ersten Stator (2) mit zumindest drei Spulen (3, 4, 5) und einen Rotor (6) mit zumindest zwei Magneten (7, 8) aufweist; wobei der erste Stator (2) und der Rotor (6) entlang einer axialen Richtung (9) nebeneinander angeordnet sind, wobei die Spulen (3, 4, 5) entlang einer Umfangsrichtung (10) nebeneinander angeordnet sind; wobei in einer radialen Richtung (13) zumindest innerhalb oder außerhalb des ersten Stators (2, 12) ein elektrisch leitender Körper (14) angeordnet ist; wobei jede Spule (3, 4, 5) einen Kern (15) aufweist, der sich ausgehend von einem ersten Ende (16) hin zu einem zweiten Ende (17) des ersten Stators (2) erstreckt, wobei der Rotor (6) benachbart zu dem zumindest einen zweiten Ende (17) angeordnet ist; wobei sich der Körper (14) entlang einer Umfangsrichtung (10) vollumfänglich und entlang einer axialen Richtung (9) bis hin zu dem zumindest einen ersten Ende (16) erstreckt; wobei ein spezifischer elektrischer erster Widerstand des Körpers (14) niedriger ist als ein spezifischer elektrischer zweiter Widerstand zumindest eines Kerns (15) einer der besagten Spulen (3, 4, 5); wobei der elektrische Motor (1) mit einem Verfahren nach einem der vorhergehenden Patentansprüche betreibbar ist.

10. Pumpenanordnung (21), zumindest umfassend eine Motoranordnung (20) nach Patentanspruch 9 und zusätzlich umfassend eine Pumpe (18), die zur Förderung eines Fluids (19) durch den elektrischen Motor (1) antreibbar ist; wobei der Körper (14) so angeordnet ist, dass das durch Pumpe (18) förderbare Fluid (19) über den Körper (14) beheizbar ist.

## Claims

1. Method for operating an electric motor (1), wherein the electric motor (1) has at least a first stator (2) with at least three coils (3, 4, 5) and a rotor (6) with at least two magnets (7, 8); wherein the first stator (2) and the rotor (6) are arranged one next to the other along an axial direction (9), wherein the coils (3, 4, 5) are arranged one next to the other along a circumferential direction (10), wherein the electric motor (1) is operated at least in the following two states:
a) in a first state, the coils (3, 4, 5) are operated with respective different phases of a three-phase current and the rotor (6) is made to rotate about a rotational axis (11);
b) in a second state, the coils (3, 4, 5) are operated with an alternating current with the same phase;
wherein an electrically conductive body (14), which is heated by induction at least during operation of the electric motor (1) in the second state, is arranged in a radial direction (13) at least within or outside of the first stator (2, 12); wherein each coil (3, 4, 5) has a core (15) which extends starting from a first end (16) to a second end (17) of the first stator (2, 12), wherein the rotor (6) is arranged adjacent to the at least one second end (17); **characterized in that** the body (14) extends along a circumferential direction (10) completely and along an axial direction (9) up to the at least one first end (16).

2. Method as claimed in claim 1, wherein the electric motor (1) is operated in both states, so that the rotor (6) is driven by the operation of the electric motor (1) in the first state and chronologically in parallel a body (14) is heated by the operation of the electric motor (1) in the second state.

3. Method as claimed in one of the preceding claims, wherein the electric motor (1) has a second stator (12) with at least three coils (3, 4, 5); wherein the rotor (6) is arranged along the axial direction (9) between the first stator (2) and the second stator (12).

4. Method as claimed in one of the preceding claims, wherein a specific electrical first resistance of the body (14) is lower than a specific electrical second resistance of a core (15) of a coil (3, 4, 5).

5. Method as claimed in one of the preceding claims, wherein the body (14) is in contact, at the at least one first end (16), with the cores (15) of the coils (3, 4, 5).

6. Method as claimed in one of the preceding claims, wherein in the second state a first portion of electrical power, which is applied to the electric motor (1), in the at least one stator (2, 12) and a second portion in the body (14) are converted into heat, wherein the first portion is at most 80% of the second portion.

7. Method as claimed in one of the preceding claims, wherein a pump (18) for feeding a fluid (19) can be driven by means of the electric motor (1), wherein in the first state the pump (18) is operated and in the second state at least the fluid (19) which can be fed by the pump (18) is heated.

8. Method as claimed in one of the preceding claims, wherein the electrical power which is used in the second state is at least 1% of a rated power of the electric motor (1).

9. Motor assembly (20), at least comprising an electric motor (1) which has at least a first stator (2) with at least three coils (3, 4, 5) and a rotor (6) with at least two magnets (7, 8); wherein the first stator (2) and the rotor (6) are arranged one next to the other along an axial direction (9), wherein the coils (3, 4, 5) are arranged one next to the other along a circumferential direction (10); wherein an electrically conductive body (14) is arranged in a radial direction (13) at least within or outside the first stator (2, 12); wherein each coil (3, 4, 5) has a core (15) which extends starting from a first end (16) to a second end (17) of the first stator (2), wherein the rotor (6) is arranged adjacent to the at least one second end (17); wherein the body (14) extends along a circumferential direction (10) completely and along an axial direction (9) up to the at least one first end (16); wherein a specific electrical first resistance of the body (14) is lower than a specific electrical second resistance of at least one core (15) of the coils (3, 4, 5); wherein the electric motor (1) can be operated with a method as claimed in one of the preceding claims.

10. Pump assembly (21), at least comprising a motor assembly (20) as claimed in claim 9 and additionally comprising a pump (18) which can be driven by the electric motor (1) in order to feed a fluid (19); wherein the body (14) is arranged in such a way that the fluid (19) which can be fed by the pump (18) can be heated via the body (14).

## Revendications

1. Procédé permettant de faire fonctionner un moteur électrique (1), le moteur électrique (1) présentant au moins un premier stator (2) pourvu d'au moins trois bobines (3, 4, 5) et un rotor (6) pourvu d'au moins deux aimants (7, 8) ; le premier stator (2) et le rotor (6) étant disposés l'un à côté de l'autre le long d'une direction axiale (9), les bobines (3, 4, 5) étant disposées les unes à côté des autres le long d'une direction circonférentielle (10), le moteur électrique (1) fonctionnant au moins dans les deux états suivants :
a) dans un premier état, les bobines (3, 4, 5) fonctionnent avec des phases respectivement différentes d'un courant triphasé, et le rotor (6) est mis en rotation autour d'un axe de rotation (11) ;
b) dans un deuxième état, les bobines (3, 4, 5) fonctionnent avec un courant alternatif en phase ;
dans lequel, dans une direction radiale (13) au moins à l'intérieur ou à l'extérieur du premier stator (2), un corps électriquement conducteur (14) est disposé qui est chauffé par induction au moins lors d'un fonctionnement du moteur électrique (1) dans le deuxième état; chaque bobine (3, 4, 5) présentant un noyau (15) qui s'étend en partant d'une première extrémité (16) jusqu'à une deuxième extrémité (17) du premier stator (2), le rotor (6) étant disposé de manière adjacente à ladite au moins une deuxième extrémité (17) ;
**caractérisé en ce que** le corps (14) s'étend le long d'une direction circonférentielle (10) sur toute la circonférence et le long d'une direction axiale (9) jusqu'à ladite au moins une première extrémité (16).

2. Procédé selon la revendication 1, dans lequel le moteur électrique (1) fonctionne dans les deux états de sorte qu'un entraînement du rotor (6) par le fonctionnement du moteur électrique (1) dans le premier état et en parallèle dans le temps provoque un réchauffement d'un corps (14) par le fonctionnement du moteur électrique (1) dans le deuxième état.

3. Procédé selon l'une quelconque des revendications précédentes, dans lequel le moteur électrique (1) présente un deuxième stator (12) pourvu d'au moins trois bobines (3, 4, 5) ; le rotor (6) étant disposé le long de la direction axiale (9) entre le premier stator (2) et le deuxième stator (12).

4. Procédé selon l'une quelconque des revendications précédentes, dans lequel une première résistance électrique spécifique du corps (14) est inférieure à une deuxième résistance électrique spécifique d'un noyau (15) d'une bobine (3, 4, 5).

5. Procédé selon l'une quelconque des revendications précédentes, dans lequel le corps (14) entre en contact avec les noyaux (15) des bobines (3, 4, 5) au niveau de ladite au moins une première extrémité (16).

6. Procédé selon l'une quelconque des revendications précédentes, dans lequel, dans le deuxième état, une première part d'une puissance électrique appliquée au moteur électrique (1) dans ledit au moins un stator (2, 12) et une deuxième part dans le corps (14) sont transformées en chaleur, la première part étant au maximum égale à 80 % de la deuxième part.

7. Procédé selon l'une quelconque des revendications précédentes, dans lequel le moteur électrique (1) permet d'entraîner une pompe (18) servant à refouler un fluide (19), la pompe (18) fonctionnant dans le premier état, et le fluide (19) pouvant être refoulé par la pompe (18) étant chauffé dans le deuxième état.

8. Procédé selon l'une quelconque des revendications précédentes, dans lequel, la puissance électrique mise en œuvre dans le deuxième état est au moins égale à 1 % d'une puissance nominale du moteur électrique (1).

9. Ensemble moteur (20), comprenant au moins un moteur électrique (1) qui présente au moins un premier stator (2) pourvu d'au moins trois bobines (3, 4, 5) et un rotor (6) pourvu d'au moins deux aimants (7, 8) ; le premier stator (2) et le rotor (6) étant disposés l'un à côté de l'autre le long d'une direction axiale (9), les bobines (3, 4, 5) étant disposées les unes à côté des autres le long d'une direction circonférentielle (10) ; dans lequel, dans une direction radiale (13) au moins à l'intérieur ou à l'extérieur du premier stator (2, 12), un corps électriquement conducteur (14) est disposé ; chaque bobine (3, 4, 5) présentant un noyau (15) qui s'étend en partant d'une première extrémité (16) jusqu'à une deuxième extrémité (17) du premier stator (2), le rotor (6) étant disposé de manière adjacente à ladite au moins une deuxième extrémité (17) ; le corps (14) s'étendant le long d'une direction circonférentielle (10) sur toute la circonférence et le long d'une direction axiale (9) jusqu'à ladite au moins une première extrémité (16) ; une première résistance électrique spécifique du corps (14) étant inférieure à une deuxième résistance électrique spécifique d'au moins un noyau (15) d'une desdites bobines (3, 4, 5); le moteur électrique (1) pouvant fonctionner selon un procédé selon l'une quelconque des revendications précédentes.

10. Ensemble de pompe (21), comprenant au moins un ensemble moteur (20) selon la revendication 9 et comprenant en outre une pompe (18) qui peut être entraînée par le moteur électrique (1) pour refouler un fluide (19) ; le corps (14) étant disposé de telle sorte que le fluide (19) pouvant être refoulé par la pompe (18) peut être chauffé par le corps (14).
